(19) Europäisches Patentamt / European Patent Office / Office européen des brevets

(11) **EP 4 391 114 A1**

(12) **EUROPEAN PATENT APPLICATION**

(43) Date of publication:
**26.06.2024 Bulletin 2024/26**

(21) Application number: **22215522.8**

(22) Date of filing: **21.12.2022**

(51) International Patent Classification (IPC):
*H01M 4/525* (2010.01)    *H01M 10/058* (2010.01)
*H01M 10/052* (2010.01)    *H01M 4/04* (2006.01)
*C01F 17/36* (2020.01)    *H01M 10/0562* (2010.01)
*H01M 10/04* (2006.01)

(52) Cooperative Patent Classification (CPC):
**H01M 10/0562; C01F 17/36; H01M 4/0447;
H01M 4/525; H01M 10/052; H01M 10/058;**
H01M 10/049; H01M 2300/008

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Saint-Gobain Ceramics & Plastics Inc.
Worcester, Massachusetts 01615 (US)**

(72) Inventors:
• **MARCHANDIER, Thomas
  93300 AUBERVILLIERS (FR)**
• **LAMBERT, Mathilde
  93300 AUBERVILLIERS (FR)**
• **OUSPENSKI, Vladimir
  93300 AUBERVILLIERS (FR)**

(74) Representative: **Saint-Gobain Recherche
Département Propriété Industrielle
39 Quai Lucien Lefranc
93300 Aubervilliers (FR)**

(54) **PREPARATION PROCESS FOR ALL-SOLID-STATE-BATTERIES**

(57)    The present invention relates to preparation processes of an all-solid-state-battery (ASSB) element or of an ASSB comprising a halide solid electrolyte, wherein the processes comprise a step of oxidation and an outgassing step. The invention further relates to an ASSB element and an ASSB obtained with a process according to the invention.

[Fig 1]

a) Non-Degassed

b) Degassed

EP 4 391 114 A1

## Description

### Technical field

The present invention belongs to the field of all-solid-state rechargeable batteries (ASSB) and in particular relates to a preparation process of said ASSBs containing a halide solid electrolyte.

### Technical background

ASSBs are of particular interest as a substitute to traditional Li-Ion batteries, especially since they raise fewer safety concerns and have higher capacities or energy density.

To obtain an ASSB, a solid electrolyte is used instead of the liquid electrolytes found in Li-Ion batteries. ASSBs also use Li-metal anodes and high energy NMC cathode particles, said particles being incorporated into the solid state electrolyte.

Such solid electrolyte is for example chosen from lithium thiophosphate ($\beta$-$Li_3PS_4$, LPS), argyrodite ($Li_6PS_5Cl$) such as described in H.J. Deiseroth, et al. "Li6PS5X: a class of crystalline Li-rich solids with an unusually high Li+ mobility." Angew. Chem. Int. Ed., 47 (2008), pp. 755-758 and halides, for example $Li_3InCl_6$, such as described in X. Li et al. "Air-stable Li3InCl6 electrolyte with high voltage compatibility for all-solid-state batteries." Energy Environ. Sci., 2019,12, pp. 2665-267; Schmidt, M. O. et al. "Zur Kristallstruktur von Li3InCl6." Zeitschrift für Anorg. und Allg. Chemie 1999, 625 (4), 539-540; and G.Meyer, et al. "Handbook on the Physics & Chemistry of Rare Earths", V.28, chapter 177, 2000 Elsevier Sci.

However, the main drawback of these compounds is their chemical and electro-chemical interactions with electrode materials.

Halide solid electrolytes are of particular interest since they display good ionic conductivity (above 2 mS/cm) and a better compactibility (deformability) than other solid-state inorganic electrolytes. Among these compounds, multi-halide solid electrolytes, i.e. halide solid electrolytes comprising at least two halide ions, for example Cl and Br, are of particular interest since the heavier halides, such as Br and I, yield a high conductivity for the electrolyte, while lighter halides, such as Cl and F, have a higher electrochemical stability at high potential.

However, the inventors surprisingly discovered that when placing halide solid electrolytes, in particular multi-halide solid electrolytes, at high potential, species are formed from the degradation of the electrolytes. Said species have been identified to be halogenated molecular species such as $Br_2$ and $I_2$.

These species are very oxidizing and could lead to a reaction with different elements of the ASSB such as its electrode active materials or the current collector, which would reduce the capacity or lifetime of the battery. Moreover, when said species are gaseous, they can induce potentially dangerous overpressures in the battery cell.

### Summary of the invention

Technical problem

As identified by the inventors, the *in situ* formation of species could lead to several problems.

The invention thus offers to remedy to the above identified technical problems by:

- improving the battery safety,
- improving the battery capacity and lifetime,
- enabling the use of halide solid electrolytes and in particular multi-halide solid electrolytes in ASSBs.

The present invention is further easily implemented in a preparation process, in particular at an industrial scale, of an ASSB element or of an ASSB itself.

Solution to the technical problem

Thus, according to a first aspect, the present invention relates to a preparation process of an all-solid-state-battery element comprising a halide solid electrolyte, characterized in that the process comprises:

a) a step of oxidation of the all-solid-state-battery element, and
b) an outgassing step.

An oxidation step according to the present invention may be carried on by applying a tension or advantageously in the case of an ASSB element, by treating it with an oxidizing gas such as $Cl_2$.

According to a second aspect, the present invention is also about a preparation process of an all-solid-state-battery comprising successively an anode, at least one electrolyte layer and a cathode, a halide solid electrolyte being comprised in at least one of the electrolyte layer(s) and/or in the cathode, wherein the process comprises:

a) a step of applying a tension U to the all-solid-state-battery, wherein

$$U = E + E_{ref}$$

with

$E_{ref}$, the potential difference between the anode and a lithium metal anode and
E a tension ranging from 3.0 V to 5.5 V, in particular ranging from 3.5 V to 4.0 V, and preferably from 4.0 V to 4.5 V, and

b) an outgassing step as defined in the present text.

The present invention also concerns both an all-solid-state-battery element comprising a halide solid electrolyte and an all-solid-state-battery obtained with processes according to the invention.

The outgassing steps implemented in the processes according to the invention allow to eliminate the species formed *in situ,* under normal usage conditions, from a battery cell.

Advantages of the invention

Firstly, by eliminating said species, the internal pressure of a battery cell is reduced so as to prevent any leakage.

Moreover, said species are strong oxidants which can react with several elements of an ASSB such as the electrode active materials, e.g. Lithium-Nickel-Manganese-Cobalt oxides at the cathode, or the current collector. The present invention allows to prevent such reaction by removal of said species and thus prevent any related reduction of the capacity and/or life of an ASSB.

Furthermore, multi-halide solid electrolytes are of particular interest because they can combine the high conductivity of the heavier halides and the stability of the lighter ones through a passivation mechanism. However, said passivation leads to the formation of the said species which are the main drawback of the multi-halide solid electrolytes. The present invention thus enables the use of said materials without negatively impacting the resulting ASSB.

Finally, the present invention is easily implemented into a battery production line. Indeed, while the need for outgassing was not yet identified for ASSBs, an outgassing step is commonly implemented for Li-ion batteries to remove the gas formed during the battery formation stage.

As reported in Deng, Z., Joule, 4, 2020, 2017-2029, in a Li-ion battery, the reduction of the liquid electrolyte at the negative electrode leads to the formation of a solid-electrolyte-interface (SEI) and to carbonaceous gases. Industrially, these gases are eliminated during the first cycles of the battery.

However, to the best knowledge of the inventors, in ASSBs, the decomposition of the electrolyte into different species is unexpected and it is commonly accepted that an outgassing step, which could also be referred to as a degassing step, is not necessary (see for example Fraunhofer ISI, Solid-state battery roadmap 2035+, April 2022).

Strauss, F, ACS Appl. Mater. Interfaces 2020, 12, 20462-20468 reported some cases of gases formation in ASSB also identified in Li-ion batteries. However, this gas formation results from the degradation of the cathode active material. On the other hand, the present invention does not pertain to the cathode active material as it concerns itself only with the species formed by a controlled electrochemical preparation of a halide solid electrolyte that takes place before any actual cycling.

**Brief description of the drawings**

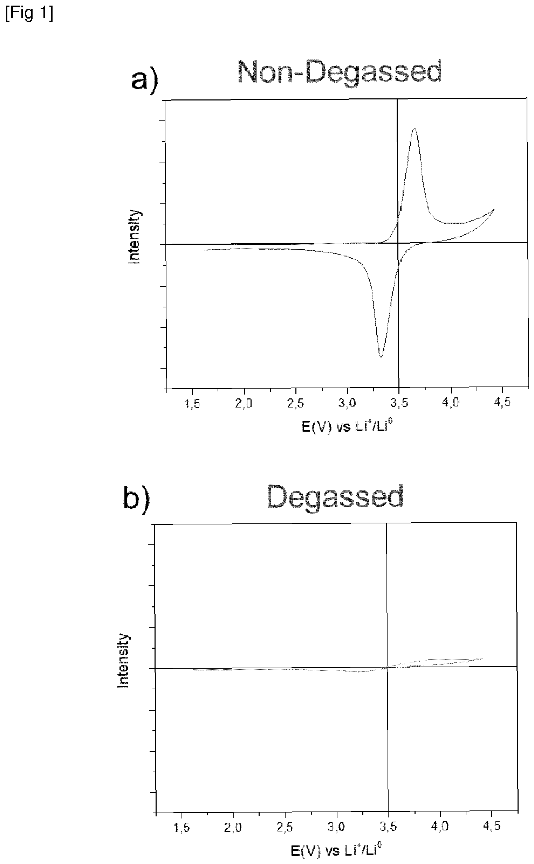

Fig 1 is a graphical representation of the cyclic voltammetry performed in the examples below on a) a pristine cell, corresponding to the comparative example 1 and b) a degassed cell, corresponding to the example 2 according to the invention, wherein the x-axis represents the potential applied to the cell and the y-axis represents the intensity of the measured current.

**Detailed description of embodiments**

The present invention can be implemented for any ASSB element comprising a halide solid electrolyte. ASSB element could mean any element found in an ASSB or suitable for obtaining an ASSB from it. Preferably, the present invention is suitable for an electrolyte layer, a catholyte, i.e. the mixture of a cathode active material and an electrolyte, or the electrolyte material itself. The electrolyte material may be in the form of a powder, of a paste containing said powder or of a slurry.

Accordingly, an ASSB element or an ASSB obtained with a process according to the invention may comprise the halide solid electrolytes as detailed herein after.

In an ASSB according to the invention or implemented in a process according to the invention, the halide solid electrolyte may be comprised in the cathode and/or in the electrolyte layer.

Halide solid electrolytes

Halide solid electrolytes may be represented by the following chemical formula

$$M_{3-z}(Me^{k+})_f X_{3-z+k*f}$$

wherein $-3 \leq z \leq 3$,

k is the valence of Me and $2 \leq k < 6$, $0 \leq f \leq 1$;

- M comprises an alkali metal element, in particular including Li;

- Me comprises a metal other than an alkali metal, and

- X is a halogen.

In a particular embodiment, f is different from zero.

In a particular embodiment, Me comprises more than one metal element and k may be the average of the total of the valence of each metal element. For example, when Me includes a trivalent element and a tetravalent element in equal molar quantity, $k=(3+4)/2=3.5$. In particular, k may be 2, 3, 4 or 5.

It is understood that atomic vacancy can be present inside the unit cell of the halide solid electrolyte. In this case, atomic vacancy can be noted in the formula of the solid halide electrolyte as $M_{3-z}(Me^{k+})_{f \bullet y} X_{3-z+k*f}$ wherein • represents atomic vacancy inside the unit cell and y is the number of vacant atomic positions. In a particular embodiment, y can be $f*(k-1)$.

In a particular embodiment, M can include Li, Na, K, Rb, Cs, or any combination thereof. For example, M can include at least one of Li and Na, or a combination thereof. In a further aspect, M can consist of at least one alkali metal element. For example, M can consist essentially of at least one alkali metal element chosen from the group consisting of Li, Na, K, Rb and Cs. In another example, M can consist of Li. In yet another example, M can consist of a combination of Li and at least one of Na, K, Rb and Cs. In still another example, M can consist of Na and at least one of Cs and Rb. In another example, M can consist of at least one of Na and Cs.

In a particular embodiment, Me can include an alkaline earth metal element, a rare earth element, a 3d transition metal, an element chosen from Zr, Ti, Sn, Th, Ge, Ta, Nb, Mo, W, Sb, Te, In, Bi, Al, Ga, and any combination thereof. For example, Me can include an alkaline earth metal including Ba, Mg, Ca and Sr, or any combination thereof. In another example, Me can include a rare earth element, in particular Me can consist of at least one rare earth element. The rare earth element may be chosen from Y, Sc, Ce, Gd, Er, La, Yb and their combinations. In a further example, Me can include a 3d transition metal, in particular chosen from Zn, Cu, V and any combination thereof. In still another example, Me can include an element chosen from Zr, Ti, Sn, Th, Ge, Ta, Nb, Mo, W, Sb, Te, In, Bi, Al, Ga and any of their combinations.

In a particular embodiment, X can include a halogen, in particular chosen from Cl, Br, I and any combination thereof. In an example, X can include at least one of Cl and Br. Preferably, X can consist of Cl, Br or any combination thereof. In a particularly preferred embodiment, X consists of Cl and Br.

Accordingly, an all-solid-state-battery element or an all-solid-state-battery according to the invention or implemented in a process according to the invention may comprise a halide solid electrolyte of the formula

$$M_{3-z}(Me^{k+})_f X_{3-z+k*f}$$

wherein $-3 \leq z \leq 3$, $2 \leq k < 6$, $0 \leq f \leq 1$;

- M comprises an alkali metal element, in particular including Li;

- Me comprises a divalent, trivalent, tetravalent, pentavalent or hexavalent metal element or any combination thereof, in particular Me is chosen from:

    i. alkaline earth metals, including Ba, Mg, Ca, Sr,

    ii. rare earth elements such as Y, Sc, Ce, Gd, Er, La, Yb and their combinations,

    iii. a 3d transition metal such as Zn, Cu, V, and

    iv. an element chosen from Zr, Ti, Sn, Th, Ge, Ta, Nb, Mo, W, Sb, Te, In, Bi, Al, Ga, and

    v. any combination thereof, and

- X is a halogen, in particular chosen from Cl, Br, I and any combination thereof;

preferably the halide solid electrolyte is chosen from $Li_3InCl_6$ and $Li_3Y(Cl,Br)_6$.

In the present text, it is understood that, for example in $Li_3Y(Cl,Br)_6$, $(Cl,Br)_6$ means that any combination of Cl and Br may be present in the compound wherein the sum of the stoichiometric coefficients of Cl and Br is equal to 6.

In a particular embodiment, the halide solid electrolyte can be represented by $Li_{3-z}Me^{k+}X_{3-z+k}$. When z is not 0, the complex metal halide can be non-stoichiometric. When z is 0, the complex metal halide can be stoichiometric. For example, $-0.95 \leq z \leq 0.95$. In another example, Me includes Y, Gd, Yb, In, Sc, Zn, Mg, Ca, Ba, Sn or a combination thereof, and X is Cl, Br or a combination thereof.

In a particular embodiment, the halide solid electrolyte is a multi-halide solid electrolyte, in particular comprising at least one of Cl and F and at least one of Br and I, preferably the halide solid electrolyte comprises at least Cl and Br.

In the present text, by "multi-halide solid electrolyte(s)", it is understood that are designated halide solid electrolyte(s) comprising at least two halide ions.

In a particular embodiment, the solid halide electrolyte can be represented by $Li_3MeBr_6$. In another particular embodiment, the solid halide electrolyte can be represented by $Li_3MeCl_6$. In a preferred embodiment, the solid halide electrolyte can be represented by $Li_3Me(Cl,Br)_6$. In these embodiments, Me can consist of at least one of the above-mentioned metal elements, having a valence of 3. Me can include at least one of the above-mentioned metal elements, wherein the average valence of the at least one metal element is 3.

In another particular embodiment, the solid halide electrolyte can consist of Li, Y, and at least one of Cl and Br. For example, the solid halide electrolyte can consist of Li, Y and Cl. In another example, the solid halide electrolyte can consist of Li, Y and Br. In still another example, the solid halide electrolyte can consist of Li, Y, Cl and Br. In a particular example, the solid halide electrolyte can be represented by $Li_{3x}Y_{1-x}Cl_3$, $Li_{3x}Y_{1-x}Br_3$ or $Li_{3x}Y_{1-x}(Cl,Br)_3$, wherein $0 < x \leq 0.5$.

In another particular embodiment, the solid halide electrolyte can consist of Li, Gd and at least one of Cl and Br. For example, the solid halide electrolyte can consist of Li, Gd and Cl. In another example, the solid halide electrolyte can consist of Li, Gd and Br. In still another example, the solid halide electrolyte can consist of Li, Gd, Cl and Br. In a particular example, the solid halide electrolyte can be represented by $Li_{3x}Gd_{1-x}Cl_3$, $Li_{3x}Gd_{1-x}Br_3$ or $Li_{3x}Gd_{1-x}(Cl,Br)_3$, wherein $0.01 \leq x < 1$.

In another particular embodiment, the solid halide electrolyte can consist of Li, In, and at least one of Cl and Br. For example, the solid halide electrolyte can consist of Li, In and Cl. In another example, the solid halide electrolyte can consist of Li, In and Br. In still another example, the solid halide electrolyte can consist of Li, In, Cl and Br. In a particular example, the solid halide electrolyte can be represented by $Li_{3x}In_{1-x}Cl_3$, $Li_{3x}In_{1-x}Br_3$ or $Li_{3x}In_{1-x}(Cl,Br)_3$, wherein $0 \leq x < 0.5$.

The solid halide electrolyte may be chosen from $Li_3InCl_6$, $Li_3InBr_6$, $Li_3In(Cl,Br)_6$, $Li_3YCl_6$, $Li_3YBr_6$, $Li_3Y(Cl,Br)_6$, $Li_{2.7}Y_{0.7}Zr_{0.3}Cl_6$, $Li_{2.8}Y_{0.8}Sn_{0.2}Cl_6$, $Li_{3.2}Y_{0.8}Zn_{0.2}Cl_6$, $Li_{3.2}Y_{0.8}Mg_{0.2}Cl_6$, $Li_3Y_{1/3}Zr_{1/3}Mg_{1/3}Cl_6$, $Li_3Y_{1/3}Sn_{1/3}Mg_{1/3}Cl_6$, $Li_3Y_{1/3}Zr_{1/3}Zn_{1/3}Cl_6$, $Li_{2.95}Na_{0.05}YBr_6$, $Li_{2.95}K_{0.05}YBr_6$, $Li_{2.95}Cs_{0.05}YBr_6$, $Li_3Y_{0.7}Gd_{0.3}Br_6$, $Li_3Y_{0.8}Yb_{0.2}Br_6$, $Li_3Y_{0.9}La_{0.1}Br_6$, $Li_2Y_{0.9}Ce_{0.1}Br_6$ or $Li_3In_{0.5}Y_{0.5}Cl_6$.

Anode

In an ASSB, the anode active material is a material capable of storing and releasing metal ions, in particular alkali metal ions such as Li or Na ions.

As the anode active material metals, carbon, oxides or nitrides may be used.

Metals suitable for use as an anode active material may be a single metal or an alloy such as lithium metal or a lithium alloy. Metals suitable for use as an anode active material may be chosen from silicon, tin, a silicon compound, a tin compound, lithium and a lithium alloy.

Examples of carbon suitable for use as an anode active material include natural graphite, coke, developing carbon, carbon fibers, spheroidal carbon, artificial graphite and amorphous carbon.

Accordingly, in an all-solid-state battery according to the invention or implemented in a process according to the invention, the anode active material may be chosen from

- oxides,

- nitrides,

- carbon such as natural graphite, coke, developing carbon, carbon fibers, spheroidal carbon, artificial graphite and amorphous carbon,

- metals such as silicon, tin, sodium or lithium, their compounds and their alloys,

in particular, the anode active material is chosen from silicon, tin, lithium, their compounds and their alloys such as $Li_xIn_y$ wherein x ranges from 0 to 1 and y ranges from 0 to 1, preferably the anode active material is $Li_{0.5}In$ or lithium.

The thickness of the anode in an ASSB according to the invention or implemented in a process according to the invention may range from 10 $\mu$m to 500 $\mu$m.

At least one of the anode and the cathode may comprise an electron conductor compound chosen from natural or artificial graphite, graphene, carbon nano-tubes, acetylene black, Ketjen black, activated carbon, carbon fluoride, metal powders, conductive whiskers, conductive metal oxides, conductive polymers, metal fibres or carbon fibres, preferably the electron conductor is vapour grown carbon fibres.

Cathode

In an all-solid-state battery according to the invention or implemented in a process according to the invention, the cathode composite may comprise a cathode active material and a halide solid electrolyte as described herein above.

The cathode active material is a material capable of storing and releasing metal ions, in particular alkali metal ions such as Li or Na ions.

As cathode active materials transition metal fluorides, polyanionic materials, fluorinated polyanionic materials, transition metal sulphides, transition metal oxyfluorides, transition metal oxysulphides, transition metal oxynitrides and lithium-containing transition metal oxide, doped or not, coated or not may be used. In particular, the cathode active material may be a transition metal oxide such as a lithium-cobalt oxide, a lithium-nickel-cobalt-aluminium oxide or a lithium-nickel-manganese-cobalt-oxide. Transition metal oxides suitable for use as a cathode active material may be, for example, $LiNi_{0.6}Mn_{0.2}Co_{0.2}O_2$, $Li(NiCoAl)O_2$ and $LiCoO_2$. Preferably, the cathode active material is the transition metal oxide of the formula $LiNi_{0.6}Mn_{0.2}Co_{0.2}O_2$ or $LiNi_{0.8}Mn_{0.1}Co_{0.1}$.

The cathode active material may be present in a ASSB according to the invention, in the form of particles. The median diameter of the anode active material particles may range from 0.1 $\mu$m to 100 $\mu$m. Preferably, the median diameter of the anode active material particles is larger than the median diameter of the solid electrolyte particles.

The thickness of the anode in an ASSB according to the invention or implemented in a process according to the invention may range from 10 $\mu$m to 500 $\mu$m.

At least one of the anode and the cathode may comprise an electron conductor compound chosen from natural or artificial graphite, graphene, carbon nano-tubes, acetylene black, Ketjen black, activated carbon, carbon fluoride, metal powders, conductive whiskers, conductive metal oxides, conductive polymers, metal fibres or carbon fibres, preferably the electron conductor is vapour grown carbon fibres.

Accordingly, in an all-solid-state-battery according to the invention or implemented in a process according to the invention, the cathode may comprise a cathode active material chosen from transition metal fluorides, polyanionic materials, fluorinated polyanionic materials, transition metal sulphides, transition metal oxyfluorides, transition metal oxysulphides, transition metal oxynitrides and lithium-containing transition metal oxide, doped or not, coated or not, in particular the cathode active material is a transition metal oxide such as a lithium-cobalt oxide, a lithium-nickel-cobalt-aluminium oxide or a lithium-nickel-manganese-cobalt-oxide, preferably of the formulae $LiNi_{0.6}Mn_{0.2}Co_{0.2}O_2$ or $LiNi_{0.8}Mn_{0.1}Co_{0.1}$.

Preparation process

An all-solid-state battery element or an all-solid-state battery according to the invention or implemented in a process according to the invention is obtained firstly though steps known to the person skilled in the art to obtain said element or ASSB comprising the desired materials.

The present invention lies in further adding to processes known in the art outgassing steps. In the present text "outgassing steps", used in the plural form, is meant to include both a step of oxidation, in particular, in the case of an ASSB, of applying a tension, and the actual outgassing step.

Said outgassing steps aim at removing any specie formed by electrochemical reaction within an ASSB, in particular by the electrochemical reaction of a halide solid electrolyte, preferably a multi-halide solid electrolyte, comprised in the anode and/or the electrolyte layer(s) of an ASSB.

Said oxidation step may be carried on for a duration ranging from 10 minutes to 10 hours, in particular ranging from 30 minutes to 5 hours, and preferably ranging from 45 minutes to 3 hours.

Said tension is a tension U, defined by the relation

$$U = E + E_{ref}$$

where

$E_{ref}$ is the potential difference between the anode of the ASSB and a lithium metal anode and
E is a tension ranging from 3.0 V to 5.5 V, in particular ranging from 3.5 V to 4.0 V, and preferably from 4.0 V to 4.5 V.

In a particular embodiment of the invention, the tension U is applied for a duration ranging from 10 minutes to 10 hours, in particular ranging from 30 minutes to 5 hours, and preferably ranging from 45 minutes to 3 hours.

When applied to an ASSB element, said outgassing step may comprise, preferably consist in, placing the all-solid-state-battery element under dynamic vacuum.

When applied to an ASSB, said outgassing step may comprise, preferably consist in, opening the battery cell and placing the obtained opened cell under dynamic vacuum.

In both cases, said dynamic vacuum may be maintained at a pressure ranging from

$10^{-3}$ mBar to $10^{-1}$ mBar, in particular ranging from $5.10^{-3}$ mBar to
$5.10^{-2}$ mBar, and preferably from $7.10^{-3}$ mBar to $2.10^{-2}$ mBar.

In a particular embodiment of the invention, the outgassing step is carried on for a duration ranging from 1 minute to 10 hours, in particular ranging from 5 minutes to 5 hours, and preferably ranging from 10 minutes to 3 hours.

In a particular embodiment of the invention, the outgassing step may occur at a temperature ranging from 15 °C to 70 °C, in particular from 20 °C to 50 °C and preferably from 25 °C to 40 °C.

In a particular embodiment of the invention, after the outgassing step, the battery is closed and preferably pressed at a pressure ranging from 250 kg.cm$^{-2}$ to 3000 kg.cm$^{-2}$, in particular from 500 kg.cm$^{-2}$ to 1500 kg.cm$^{-2}$.

The battery may be closed and pressed under an inert atmosphere, preferably under argon.

The process according to the invention will further be illustrated through the examples below.

## Comparative example 1

The cell assembly was carried out in a cell consisting of a cylindrical polyetherimide (PEI) cell body and two stainless steel pistons of 8 mm diameter.

The assembling procedure was carried out under argon atmosphere in a glove box ($[O_2]$ < 1 ppm, $[H_2O]$ < 1 ppm).

The two-electrode cell was assembled as follows.

80 mg of $Li_3YCl_4Br_2$ was spread and cold pressed at 250 kg.cm$^{-2}$.

10 mg.cm$^{-2}$ of cathode composite ($Li_3YCl_4Br_2$/carbon super C65 in a 90:10 ratio) was spread onto a surface of the pressed $Li_3YCl_4Br_2$ at the cathode side. The stack was then further densified at 1100 kg.cm$^{-2}$ for 15 minutes.

Next, a lithium indium composite of formula $Li_{0.5}In$ was added the opposing side, the anode side, of the $Li_3YCl_4Br_2$ pellet as counter electrode.

Finally, the whole stack was further densified at 4 t/cm$^2$ for 15 minutes. After the compression, a pressure of 1100 kg.cm$^{-2}$ was applied on the fully assembled cell for electrochemical studies.

**Example 2 according to the invention**

The cell of example 2 was obtained according to the protocol detailed in the comparative example 1.

After its assembly, the cell was charged up to 4.5 V and this voltage was held for 1 hour. The battery was then opened at the cathode side by removing one of the stainless-steel pistons and placed at a $10^{-2}$ mBar dynamic vacuum for 1 hour.

After this vacuum treatment, the cell was closed once again at 1100 kg.cm$^{-2}$.

**Cyclic voltammetry**

The cells of the comparative example 1 and of the example 2 according to the invention were cycled between 1.6 V and 4.5 V with a 0.5 mV.s$^{-1}$ rate.

The graphical representation of the cyclic voltammetry is presented in Figure 1 wherein the graph a) corresponds to the comparative example 1 and the graph b) corresponds to the example 2 according to the invention.

While part a) of Figure 1 indicates that a reversible electrochemical process is occurring within the cell, part b) of said Figure 1 shows almost no electrochemical activity. This demonstrates that the specie responsible for the electrochemical signature in the pristine cell of the comparative example 1 was eliminated through vacuum.

**Example 3 according to the invention**

The battery assembly was carried out in a cell consisting of a cylindrical polyetherimide (PEI) cell body and two stainless steel pistons of 8 mm diameter.

The assembling procedure was carried out under argon atmosphere in a glove box ($[O_2]$ < 1 ppm, $[H_2O]$ < 1 ppm).

The two-electrode cell using a LiIn alloy anode was assembled as follows.

80 mg of $Li_3YCl_4Br_2$ was spread and cold pressed at 1100 kg.cm$^{-2}$.

10 mg.cm$^{-2}$ of cathode composite (NMC811/$Li_3YCl_4Br_2$/carbon super 65 in a 75:24:1 ratio) was spread onto a surface of the pressed $Li_3YCl_4Br_2$ at the cathode side. The stack was then further densified at 1100 kg.cm$^{-2}$ for 15 minutes.

Next, a lithium indium composite of formula $Li_{0.5}In$ was added the opposing side, the anode side, of the $Li_3YCl_4Br_2$ pellet. Finally, the cell was closed at 1100 kg.cm$^{-2}$.

The battery was then maintained at 4.3 V for 1 hour before being opened and placed under dynamic vacuum at $10^{-2}$ mBar for 1 hour.

The battery was then closed again and repressed at 1100 kg.cm$^{-2}$ before being cycled at room temperature with a C/20 speed between 1.8 V and 4.3 V.

**Claims**

1. Preparation process of an all-solid-state-battery element comprising a halide solid electrolyte, **characterized in that** the process comprises:

   a) a step of oxidation of the all-solid-state-battery element, and
   b) an outgassing step.

2. Process according to any of the preceding claims, wherein the oxidation step is carried on for a duration ranging from 10 minutes to 10 hours, in particular ranging from 30 minutes to 5 hours, and preferably ranging from 45 minutes to 3 hours.

3. Process according to any of the preceding claims, wherein the outgassing step comprises, preferably consists in, placing the all-solid-state-battery element under dynamic vacuum.

4. Process according to the preceding claim, wherein the dynamic vacuum is maintained at a pressure ranging from $10^{-3}$ mBar to $10^{-1}$ mBar, in particular ranging from $5.10^{-3}$ mBar to $5.10^{-2}$ mBar, and preferably from $7.10^{-3}$ mBar to $2.10^{-2}$ mBar.

5. Process according to any of the preceding claims, wherein the outgassing step is carried on for a duration ranging from 1 minute to 10 hours, in particular ranging from 5 minutes to 5 hours, and preferably ranging from 10 minutes to 3 hours.

6. Process according to any of the preceding claims, wherein the outgassing step occurs at a temperature ranging from 15 °C to 70 °C, in particular from 20 °C to 50 °C and preferably from 25 °C to 40 °C.

7. Process according to any of the preceding claims, wherein the halide solid electrolyte is of the formula

$$M_{3-z}(Me^{k+})_f X_{3-z+k^*f}$$

wherein $-3 \leq z \leq 3$, $2 \leq k < 6$, $0 \leq f \leq 1$;

- M comprises an alkali metal element, in particular including Li;
- Me comprises a divalent, trivalent, tetravalent, pentavalent or hexavalent metal element or any combination thereof, in particular Me is chosen from:

  i. alkaline earth metals, including Ba, Mg, Ca, Sr,
  ii. rare earth elements such as Y, Sc, Ce, Gd, Er, La, Yb and their combinations,
  iii. a 3d transition metal such as Zn, Cu, V, and
  iv. an element chosen from Zr, Ti, Sn, Th, Ge, Ta, Nb, Mo, W, Sb, Te, In Bi, Al, Ga, and
  v. any combination thereof, and

- X is a halogen, in particular chosen from Cl, Br, I and any combination thereof;

preferably the halide solid electrolyte is chosen from $Li_3InCl_6$ and $Li_3Y(Cl,Br)_6$.

8. Process according to any of the preceding claims, wherein the halide solid electrolyte is a multi-halide solid electrolyte, in particular comprising at least one of Cl and F and at least one of Br and I, preferably the halide solid electrolyte comprises at least Cl and Br.

9. Preparation process of an all-solid-state-battery, said battery comprising successively an anode, at least one electrolyte layer and a cathode, a halide solid electrolyte as defined in any of the preceding claims being comprised in at least one of the electrolyte layer(s) and/or in the cathode, **characterized in that** the preparation process comprises:

   a) a step of applying a tension U to the all-solid-state-battery, wherein

$$U = E + E_{ref}$$

   with

   $E_{ref}$, the potential difference between the anode and a lithium metal anode and
   E a tension ranging from 3.0 V to 5.5 V, in particular ranging from 3.5 V to 4.0 V, and preferably from 4.0 V to 4.5 V, and

   b) an outgassing step as defined in any of the preceding claims.

10. Process according to the preceding claim, wherein the tension U is applied for a duration ranging from 10 minutes to 10 hours, in particular ranging from 30 minutes to 5 hours, and preferably ranging from 45 minutes to 3 hours.

11. Process according to any of claims 9 or 10, wherein the outgassing step comprises, preferably consists in, opening the battery cell and placing the obtained opened cell under dynamic vacuum.

12. Process according to any of claims 10 to 11, wherein, after the outgassing step, the battery is closed and preferably pressed at a pressure ranging from 10 kg.cm$^{-2}$ to 3000 kg.cm$^{-2}$, in particular from 500 kg.cm$^{-2}$ to 1500 kg.cm$^{-2}$.

13. Process according to any of claims 10 to 12, wherein the cathode comprises a cathode active material chosen from transition metal fluorides, polyanionic materials, fluorinated polyanionic materials, transition metal sulphides, transition metal oxyfluorides, transition metal oxysulphides, transition metal oxynitrides and lithium-containing transition metal oxide, doped or not, coated or not, in particular the cathode active material is a transition metal oxide such as a lithium-cobalt oxide, a lithium-nickel-cobalt-aluminium oxide or a lithium-nickel-manganese-cobalt-oxide, preferably of the formulae $LiNi_{0.6}Mn_{0.2}Co_{0.2}O_2$ or $LiNi_{0.8}Mn_{0.1}Co_{0.1}$.

14. Process according to any of claims 10 to 13, wherein the anode comprises an anode active material chosen from:

- oxides,
- nitrides,
- carbon such as natural graphite, coke, developing carbon, carbon fibres, spheroidal carbon, artificial graphite and amorphous carbon,
- metals such as silicon, tin, sodium or lithium, their compounds and their alloys,

in particular, the anode active material is chosen from silicon, tin, lithium, their compounds and their alloys such as $Li_xIn_y$ wherein x ranges from 0 to 1 and y ranges from 0 to 1, preferably the anode active material is $Li_{0.5}In$ or lithium.

15. An all-solid-state-battery element or an all-solid-state-battery obtained with a process according to any of the preceding claims.

[Fig 1]

a) Non-Degassed

b) Degassed

Europäisches
Patentamt

European
Patent Office

Office européen
des brevets

# EUROPEAN SEARCH REPORT

Application Number

EP 22 21 5522

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JI WEIXIAO ET AL: "A kinetically stable anode interface for Li 3 YCl 6 -based all-solid-state lithium batteries", JOURNAL OF MATERIALS CHEMISTRY A, vol. 9, no. 26, 8 June 2021 (2021-06-08), pages 15012-15018, XP093052963, GB ISSN: 2050-7488, DOI: 10.1039/D1TA03042F Retrieved from the Internet: URL:http://pubs.rsc.org/en/content/article pdf/2021/TA/D1TA03042F> | 15 | INV. H01M4/525 H01M10/058 H01M10/052 H01M4/04 C01F17/36 H01M10/0562 |
| A | * abstract * * p. 15013 section 2.2; p. 15016, section 3.4 * | 1-14 | ADD. H01M10/04 |
| X | JP 2020 107594 A (FUJIFILM CORP) 9 July 2020 (2020-07-09) | 1-10, 13-15 | |
| A | * claims 10-12, 16, 19-22 * * paragraphs [0148], [0150], [0151], [0152], [0161], [0162] * | 11,12 | |

----- 

TECHNICAL FIELDS
SEARCHED      (IPC)

H01M

The present search report has been drawn up for all claims

| Place of search | Date of completion of the search | Examiner |
|---|---|---|
| Munich | 9 June 2023 | Gregori, Giuliano |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 21 5522

This annex lists the patent family members relating to the patent documents cited in the above-mentioned European search report.
The members are as contained in the European Patent Office EDP file on
The European Patent Office is in no way liable for these particulars which are merely given for the purpose of information.

09-06-2023

| Patent document cited in search report | Publication date | Patent family member(s) | Publication date |
|---|---|---|---|
| JP 2020107594 A | 09-07-2020 | JP 6966502 B2<br>JP 2020107594 A | 17-11-2021<br>09-07-2020 |

For more details about this annex : see Official Journal of the European Patent Office, No. 12/82

EPO FORM P0459

**EP 4 391 114 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H.J. DEISEROTH et al.** Li6PS5X: a class of crystalline Li-rich solids with an unusually high Li+ mobility. *Angew. Chem. Int. Ed.,* 2008, vol. 47, 755-758
- **X. LI et al.** Air-stable Li3InCl6 electrolyte with high voltage compatibility for all-solid-state batteries. *Energy Environ. Sci.,* 2019, vol. 12, 2665-267
- **SCHMIDT, M. O. et al.** Zur Kristallstruktur von Li3InCl. *Zeitschrift für Anorg. und Allg. Chemie,* 1999, vol. 625 (4), 539-540
- **G.MEYER et al.** Handbook on the Physics & Chemistry of Rare Earths. Elsevier Sci, 2000, vol. 28
- **DENG, Z.** *Joule,* 2020, vol. 4, 2017-2029
- **STRAUSS, F.** *ACS Appl. Mater. Interfaces,* 2020, vol. 12, 20462-20468